# EUROPEAN PATENT APPLICATION

(11) **EP 4 769 855 A1**
(43) Date of publication of application: **01.07.2026**
(21) Application number: 24860034.8
(22) Date of filing: 05.04.2024
(51) Int. Cl.: H02G 3/04, H02G 3/06, H02H 9/00, G01R 19/145

(54) **LEAKAGE CURRENT INDUCTION CONDUIT AND ELECTRIC SHOCK PREVENTION DEVICE INCLUDING SAME**

(30) Priority: 25.08.2023 KR 20230111766
(71) Applicant: An, Chun Hun, Dangjin-si, Chungcheongnam-do 31717 (KR)
(72) Inventor: An, Chun Hun, Dangjin-si, Chungcheongnam-do 31717 (KR)
(74) Representative: patcare Patentanwälte Partnerschaft mbB
(86) International application number: PCT/KR2024/004463
(87) International publication number: WO 2025/048102

(57) **Abstract**

The present disclosure relates to a leakage current induction conduit and an electric shock prevention device including the same. According to the present disclosure, a leakage current induction conduit through which a cable passes includes a first leakage current induction pipe section formed as a tubular component made of an insulating material; a first leakage current induction body section provided in the first leakage current induction pipe section, and configured to transmit, when leakage current occurs, leakage current to a second leakage current induction body section; a second leakage current induction pipe section provided at one end of the first leakage current induction pipe section, and formed as a tubular component made of an insulating material; and the second leakage current induction body section provided on the second leakage current induction pipe section, and configured to be connected to the first leakage current induction body section.

## Description

### Technical Field

The present disclosure relates to a leakage current induction conduit and an electric shock prevention device including the same, and more particularly, to a leakage current induction conduit and an electric shock prevention device including the same, which can prevent leakage current from flowing to the outside when leakage current occurs in electrical devices or electrical equipment, including above-ground electrical installations such as streetlights, electric motors, transformers and traffic signals, due to flooding or the like, thereby preventing electric shock accidents caused by leakage current, and further, can automatically recover leakage current to a power source side when leakage current occurs, thereby reliably preventing electric shock accidents and improving management efficiency.

### Background Art

An electric shock is a phenomenon in which the human body reacts when leakage current flowing from a power source through the human body to the ground exceeds a certain level.

Generally, when leakage current of 15 mA or more flows, it causes convulsions, and when leakage current of 50 mA or more flows, it can lead to death. The major cause of death is cardiac arrest, which occurs when the heart stops functioning as current flowing through the heart damages nerves.

The risk of an electric shock is related to the resistance of the human body when current is conducted, which is largely dependent on the condition of the skin.

When electrical equipment, such as an outlet, a heater or a light, is flooded with water, if the human body comes into contact with the water or a metal housing that is energized through the water, current flows from the exposed conductor of the electrical equipment through the water and the human body to the ground as a grounding surface.

At this time, the human body becomes very dangerous because the skin is likely to be wet with water and in this case contact resistance is extremely low.

A short between power lines refers to a problem that occurs when the insulation between the two lines decreases, increasing electrical conductivity and causing a sudden flow of current, which may cause damage such as a fire or a short circuit to electrical equipment.

In general, the insulation level of air is very high, and thus, electrical insulation is maintained between two lines by the medium of air.

However, if a highly conductive fluid fills the space between two lines due to flooding or the like, the current between the lines increases abruptly, causing a short circuit.

Korean Patent Laid-Open Publication No. 2005-0037986 discloses an anti-electric shock system in water immersion, in which a metal plate or metal mesh made of a metal material is attached to a bare charged portion so that, when the bare charged portion is flooded, current leaking from the bare charged portion is conducted to the conductive metal plate or metal mesh, thereby preventing electric shock accidents.

The metal plate or metal mesh is connected to a neutral line and an earth terminal of terminal blocks by cables, and the size of the metal plate is approximately 50 cm × 30 cm.

The above conventional technology does not explain the principle in detail, but it can be seen that the metal plate is disposed to be configured electrically in parallel with the human body so that, upon flooding, the resistance between flooded conductors is much lower than the resistance through the water and the human body, thereby limiting current flowing to the human body.

However, such a metal plate or metal mesh has problems in that it cannot shield an electric field generated radially from the bare charged portion not to effectively block leakage current and a spatial limitation exists in installation.

Taking the case of a streetlight as an example, the streetlight is configured such that a light pole is installed on the ground by a flange formed at the lower end of the light pole and the upper end of the light pole is coupled to the lower end of an arm pole, which has a shape in which the width gradually narrows upwards, by a separate connection member, which has a tapered shape. The upper end of the arm pole is configured so that a lamp arm to which a lamp is coupled is coupled to the upper end of the arm pole.

Such a streetlight is provided therein with various electrical facilities such as a power line and a transformer to light the lamp.

However, when these electrical facilities are flooded, electricity leaks and flows down together with rainwater along the streetlight. Due to this, a problem arises in that an electric shock occurs when a person comes into contact with or is near the streetlight.

### DISCLOSURE

### Technical Problem

Accordingly, an object of the present disclosure to solve the above-mentioned problems of the related art is to provide a leakage current induction conduit and an electric shock prevention device including the same, which can reliably prevent leakage current from flowing to the outside when leakage current occurs in electrical devices or electrical equipment, including above-ground electrical installations such as streetlights, electric motors, transformers and traffic signals, due to flooding or the like, thereby preventing electric shock accidents caused by leakage current.

Another object of the present disclosure is to provide a leakage current induction conduit and an electric shock prevention device including the same, which can automatically detect and recover leakage current, thereby reliably preventing electric shock accidents and improving management efficiency.

Objects to be achieved by the present disclosure are not limited to those mentioned above, and other objects not mentioned will be clearly understood by those skilled in the art from the description below.

### Technical Solution

According to one aspect for achieving the above objects and other characteristics of the present disclosure, a leakage current induction conduit through which a cable passes may include: a first leakage current induction pipe section formed as a tubular component made of an insulating material; a first leakage current induction body section provided in the first leakage current induction pipe section, and configured to transmit, when leakage current occurs, leakage current to a second leakage current induction body section; a second leakage current induction pipe section provided at one end of the first leakage current induction pipe section, and formed as a tubular component made of an insulating material; and the second leakage current induction body section provided on the second leakage current induction pipe section, and configured to be connected to the first leakage current induction body section.

According to another aspect of the present disclosure, an electric shock prevention device for preventing an electric shock caused by leakage current of a cable for supplying power to a power supply target may include: the leakage current induction conduit according to the one aspect; an automatic leakage current recovery module configured to automatically induce leakage current transmitted from the leakage current induction conduit to a neutral line of the cable; and a leakage prevention unit configured to connect the neutral line of the cable and the power supply target and prevent leakage upon flooding.

### Advantageous Effects

The leakage current induction conduit and the electric shock prevention device including the same according to the present disclosure provide the following effects.

First, the present disclosure has the effect of preventing electric shock accidents caused by leakage current and preventing human casualties by reliably preventing leakage current from flowing to the outside when leakage current occurs in electrical devices or electrical equipment due to flooding or the like.

Second, the present disclosure has the effect of shielding leakage current so that leakage current is not released to the outside, even when the protection of a wire or the insulation of a wire in use is broken and thus leakage current occurs.

Third, the present disclosure has the effect of improving management efficiency by automatically recovering leakage current when leakage current occurs.

Fourth, the present disclosure has the effect of having universality since the leakage current induction conduit and the electric shock prevention device including the same may be applied to various electrical devices or electrical equipment such as street lights, electric motors, transformers and traffic signals.

Effects of the present disclosure are not limited to those mentioned above, and other effects not mentioned will be clearly understood by those skilled in the art from the description below.

### Brief Description of Drawings

FIG. 1 is a drawing illustrating a leakage current induction conduit according to the present disclosure.
FIG. 2 is a drawing illustrating separately components of the leakage current induction conduit according to the present disclosure.
FIG. 3 is a drawing illustrating a leakage current shielding pipe included in the leakage current induction conduit according to the present disclosure, wherein (A) is a longitudinal cross-sectional view and (B) is a transverse cross-sectional view.
FIG. 4 is a drawing illustrating the configurations of a leakage current induction conduit and an automatic leakage current recovery module included in an electric shock prevention device according to the present disclosure.
FIG. 5 is a drawing illustrating an embodiment of the automatic leakage current recovery module included in the electric shock prevention device according to the present disclosure.
FIG. 6 is a drawing illustrating separately some components that constitute the electric shock prevention device according to the present disclosure.
FIG. 7 is an exploded drawing illustrating a leakage prevention unit according to the present disclosure.
FIG. 8 is a drawing illustrating an application section included in the leakage prevention unit of the electric shock prevention device according to the present disclosure.
FIG. 9 is a drawing illustrating an application connection part included in the leakage prevention unit of the electric shock prevention device according to the present disclosure.
FIG. 10 is a drawing illustrating an application notification part included in the leakage prevention unit of the electric shock prevention device according to the present disclosure.
FIG. 11 is a drawing illustrating an electric shock prevention section included in the leakage prevention unit of the electric shock prevention device according to the present disclosure.

### Mode for Disclosure

Additional objects, features and advantages of the present disclosure will be understood more clearly from the following detailed description and accompanying drawings.

Before the detailed description of the present disclosure, it should be understood that as the present disclosure may make diverse changes and have various embodiments, the examples described below and shown in the drawings are not intended to limit the present disclosure to specific embodiments, but include all changes, equivalents and substitutions included in the spirit and technical scope of the present disclosure.

In addition, in making descriptions with reference to the accompanying drawings, like reference numerals will be assigned to like elements regardless of drawing symbols, and duplicated descriptions thereof will be omitted. In describing the present disclosure, when it is determined that specific description of a known technology related to the present disclosure unnecessarily obscures the gist of the present disclosure, the detailed description will be omitted.

Hereinafter, a leakage current induction conduit and an electric shock prevention device including the same according to a preferred embodiment of the present disclosure will be described in detail with reference to the attached drawings.

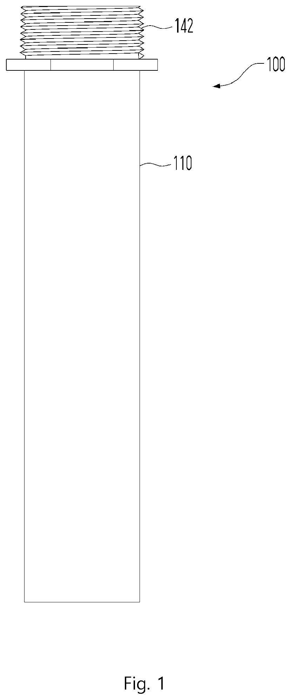

First, the leakage current induction conduit according to the present disclosure will be described below in detail with reference to FIG. 1 to FIG. 3.

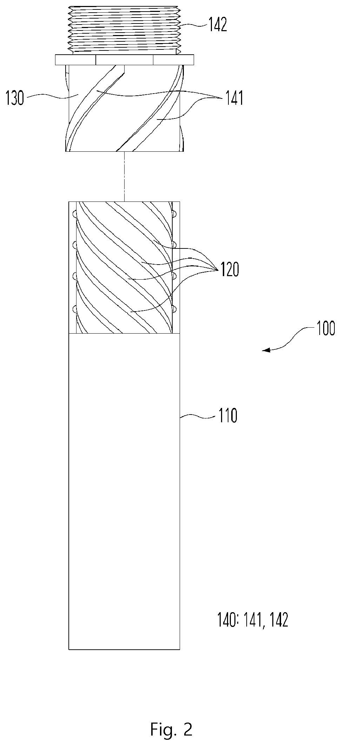

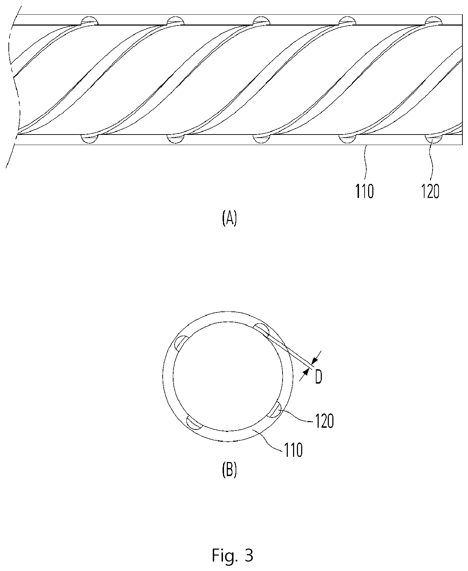

FIG. 1 is a drawing illustrating a leakage current induction conduit according to the present disclosure, FIG. 2 is a drawing illustrating separately components of the leakage current induction conduit according to the present disclosure, and FIG. 3 is a drawing illustrating a leakage current shielding pipe included in the leakage current induction conduit according to the present disclosure, wherein (A) is a longitudinal cross-sectional view and (B) is a transverse cross-sectional view.

As illustrated in FIG. 1 to FIG. 3, a leakage current induction conduit 100 according to the present disclosure, as a conduit in which a cable for providing power to an electrical device or electrical equipment is guided, largely includes a first leakage current induction pipe section 110, a first leakage current induction body section 120, a second leakage current induction pipe section 130, and a second leakage current induction body section 140. For example, if electrical equipment is a streetlight, a cable for supplying power to the streetlight is connected from the underground to pass through the leakage current induction conduit.

In detail, as illustrated in FIG. 1 to FIG. 3, the leakage current induction conduit 100 according to the present disclosure, as a conduit in which a cable for providing power to an electrical device or electrical equipment is guided, includes: a first leakage current induction pipe section 110 guiding a cable therein and formed of an insulating material; a first leakage current induction body section 120 provided inside the first leakage current induction pipe section 110 and configured to transmit, when leakage current occurs, leakage current to a second leakage current induction body section 140 provided in a second leakage current induction pipe section 130; the second leakage current induction pipe section 130 formed of an insulating material and provided at one end of the first leakage current induction pipe section 110; and the second leakage current induction body section 140 provided on the second leakage current induction pipe section 130 and configured to be electrically conductively connected to the first leakage current induction body section 120.

The first leakage current induction pipe section 110 is a tubular component through the inside of which a cable is guided and that is formed of an insulating material.

In detail, the first leakage current induction pipe section 110 is formed of a resin material such as plastic, and an insulating material for forming the first leakage current induction pipe section 110 is not limited thereto. As will be described below, considering that the first leakage current induction body section 120 is provided in the first leakage current induction pipe section 110, it is preferred that the first leakage current induction pipe section 110 is formed of a resin material in consideration of formability and manufacturability (e.g., extrusion).

When the length of the first leakage current induction pipe section 110 is increased, two or more first leakage current induction pipe sections 110 may be configured to be connected with each other. In this case, first leakage current induction body sections 120 formed in neighboring first leakage current induction pipe sections 110 may be connected with each other through a connector for electrically connecting first leakage current induction body sections 120 to each other.

The first leakage current induction body section 120 is a component that is provided inside the first leakage current induction pipe section 110 and is configured to transmit, when leakage current occurs, leakage current to the second leakage current induction body section 140.

In detail, the first leakage current induction body section 120 is composed of a conductor that is formed on the inner wall (inner surface) of the first leakage current induction pipe section 110, and preferably, may be configured in such a manner that one or more conductor strips are provided on the inner surface of the first leakage current induction pipe section 110 while forming helical shapes.

It is preferred that helical grooves are formed on the inner surface of the first leakage current induction pipe section 110 and the first leakage current induction body section 120 is provided in the helical grooves.

The first leakage current induction body section 120 may be formed by fusing a conductive constituent capable of being compounded with resin, such as graphene or graphite, into the helical grooves. It is preferred that the first leakage current induction body section 120 be formed to have a conductivity of 200 ohms (Ω) or less.

When the first leakage current induction body section 120 is provided in the helical grooves of the first leakage current induction pipe section 110, the upper surface of the first leakage current induction body section 120 (or the height of the first leakage current induction body section 120) is formed such that a deviation D from the upper surface of the helical groove is 1 mm or more. This is to provide a clearance tolerance to prevent a short circuit and ensure dielectric strength in case of damage to the covering of a cable.

The drawing illustrates a case where four helical grooves that are formed in the first leakage current induction pipe section 110 so that the first leakage current induction body section 120 is provided therein are spaced apart at 90° intervals.

In this way, when the first leakage current induction body section 120 is formed in a plurality of two or more (four in the drawing), even if some of them are damaged, the first leakage current induction body section 120 is always connected to the second leakage current induction body section 140 of the second leakage current induction pipe section 130, so that, even if the insulation of a cable is damaged at any point inside the first leakage current induction pipe section 110 and leakage current occurs, leakage current may be shielded to be transmitted to a neutral line (a leakage current transmission part of the second leakage current induction body section 140).

The helical groove formed in the first leakage current induction pipe section 110 may be formed in a semicircular shape as illustrated in the drawing. However, the present disclosure is not limited thereto, and the helical groove formed in the first leakage current induction pipe section 110 may be formed in various shapes or forms.

The second leakage current induction pipe section 130 is formed of an insulating material, and is formed as a tubular component that is provided at one end of the first leakage current induction pipe section 110.

The second leakage current induction pipe section 130 is configured to be detachably connected to the first leakage current induction pipe section 110. The connection side end of the second leakage current induction pipe section 130 (the end on a side connected to the first leakage current induction pipe section 110) is formed to have a size and a shape that may allow the second leakage current induction pipe section 130 to be coupled into the first leakage current induction pipe section 110.

An insulating rubber layer is formed on the inner surface of the second leakage current induction pipe section 130 to insulate the interior of the second leakage current induction pipe section 130. A hexagonal nut may be formed on the the central portion of the outer surface of the second leakage current induction pipe section 130. This is to facilitate coupling and decoupling of an upper induction body section 142 of the second leakage current induction body section 140, to be described below, with respect to a coupling target when the upper induction body section 142 of the second leakage current induction body section 140 is provided in a screw thread form.

The second leakage current induction body section 140 is a component that is provided on the second leakage current induction pipe section 130 and is configured to be electrically conductively connected to the first leakage current induction body section 120.

In detail, the second leakage current induction body section 140 includes a lower induction body section 141 that is formed on the lower portion of the outer surface of the second leakage current induction pipe section 130 to be electrically connected to the first leakage current induction body section 120, and the upper induction body section 142 that is formed on the upper portion of the outer surface of the second leakage current induction pipe section 130 and is electrically connected to the lower induction body section 141.

The lower induction body section 141 is formed in a helical shape the same as the pattern of the helical groove formed on the inner wall (inner surface) of the first leakage current induction pipe section 110, so that, when the second leakage current induction pipe section 130 is coupled into the first leakage current induction pipe section 110, the lower induction body section 141 of the second leakage current induction body section 140 may be brought into close contact with and electrically connected to the first leakage current induction body section 120.

The lower induction body section 141 may be formed in a screw thread type. In this case, the inner surface of the first leakage current induction pipe section 110 may be machined with a screw tap, and the lower induction body section 141 may be threadedly coupled and electrically connected to the first leakage current induction body section 120 formed in the helical grooves.

The upper induction body section 142 may be formed in a screw thread shape. Due to this, as mentioned above, the upper induction body section 142 may be easily coupled to the coupling target through a nut in such a way to induce leakage current.

As described above, the hexagonal nut may be formed on the central portion of the outer surface of the second leakage current induction pipe section 130. In this case, a through hole is formed on the proximal end portion of the hexagonal nut, that is, on the inner edge of the hexagonal nut, and the lower induction body section 141 and the upper induction body section 142 are connected through the through hole.

In the second leakage current induction body section 140 configured as described above, when the first leakage current induction pipe section 110 and the second leakage current induction pipe section 130 are coupled to each other, the lower induction body section 141 is in close contact with the first leakage current induction body section 120 so that leakage current generated in the first leakage current induction pipe section 110 is transmitted to the neutral line (the leakage current transmission part of the second leakage current induction body section 140) through the second leakage current induction pipe section 130.

Meanwhile, an automatic leakage current recovery module 200 is configured to be connected to the leakage current induction conduit 100 according to the present disclosure and to allow leakage current transmitted from the leakage current induction conduit 100 to automatically flow to the neutral line of the cable. The automatic leakage current recovery module 200 is included in an electric shock prevention device according to the present disclosure.

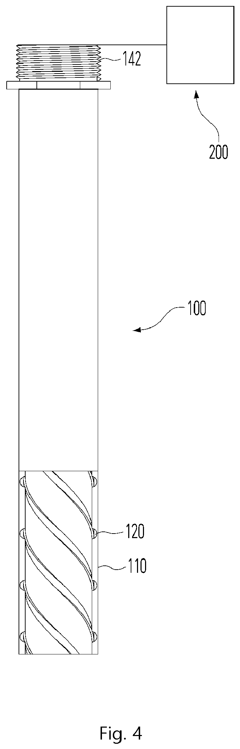

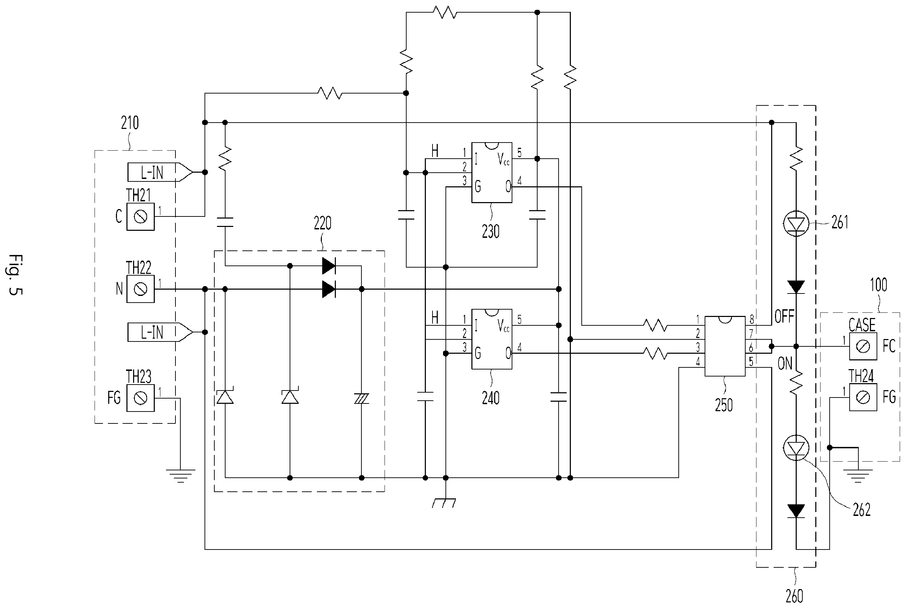

The automatic leakage current recovery module 200 will be described below in detail with reference to FIG. 4 and FIG. 5.

FIG. 4 is a drawing illustrating the configurations of a leakage current induction conduit and an automatic leakage current recovery module included in an electric shock prevention device according to the present disclosure, and FIG. 5 is a drawing illustrating an embodiment of the automatic leakage current recovery module included in the electric shock prevention device according to the present disclosure.

As illustrated in FIG. 4 and FIG. 5, the automatic leakage current recovery module 200 is a component that is configured to cause leakage current transmitted from the leakage current induction conduit 100 to automatically flow to the neutral line of the cable.

In other words, the automatic leakage current recovery module 200, as a component that is configured to automatically recover leakage current, is configured to automatically switch so that a neutral line N is connected to a leakage current shielding device section regardless of a direction in which a hot line L and the neutral line N are connected to an input section.

As illustrated in FIG. 5, the automatic leakage current recovery module 200 largely includes an input section 210, a constant voltage section 220, a NAND gate section 230, an AND gate section 240, an electronic switch section 250, and a display section 260.

The input section 210 is a component to which the hot line L and the neutral line N extending from the outside are connected.

The constant voltage section 220 is a component where the hot line L and the neutral line N are connected to a ground G side and a zener diode (ZD), respectively, to output a predetermined voltage and a capacitor C takes charge of maintaining the predetermined voltage.

The NAND gate section 230 is a component that outputs a logic value "L (low)" to an output terminal 4 when both a first input terminal 1 and a second input terminal 2 from the hot line L are "H (high)" and outputs a logic value "H" to the output terminal 4 when both the first input terminal 1 and the second input terminal 2 from the hot line L are "L".

The AND gate section 240 is a component that outputs a logic value "H" to an output terminal 4 when both a first input terminal 1 and a second input terminal 2 from the hot line L are "H" and outputs a logic value "L" to the output terminal 4 when both the first input terminal 1 and the second input terminal 2 from the hot line L are "L".

The electronic switch section 250 is a component that connects an output terminal 6 to a terminal 5 when the output of the NAND gate section 230 is "L" and the output of the AND gate section 240 is "H" and connects the output terminal 6 to a terminal 8 when the output of the NAND gate section 230 is "H" and the output of the AND gate section 240 is "L".

The automatic leakage current recovery module 200 may further include the display section 260. The display section 260 may be configured such that an upper LED 261 emits light when an upper side is connected to the hot line L and a lower LED 262 emits light when a lower side is connected to the hot line L.

An example will be described in which a first terminal TH21 of the input section 210 is connected to the hot line L and a second terminal TH22 of the input section 210 is connected to the neutral line N.

Because it is a state in which the first terminal TH21 of the input section 210 is connected to the hot line L, "H" is inputted to the first and second input terminals 1 and 2 of the NAND gate section 230, and the NAND gate section 230 outputs "L". "H" is inputted to the first and second input terminals 1 and 2 of the AND gate section 240, and the AND gate section 240 outputs "H". Since the output of the NAND gate section 230 is "L" and the output of the AND gate section 240 is "H", the electronic switch section 250 connects the output terminal 6 to the terminal 5.

Accordingly, the neutral line N that is connected to the second terminal TH22 of the input section 210 is connected to the leakage current induction conduit 100. That is to say, leakage current generated in the leakage current induction conduit 100 flows toward the neutral line N on a power side.

A terminal with a reference symbol FG in the leakage current induction conduit 100 is a terminal that is grounded to the ground, and a terminal with a reference symbol FC is a terminal that is connected to the outer casing of electrical equipment (a streetlight pole), for example. Due to the presence of the terminal FC, even if a pedestrian touches the streetlight pole when the streetlight pole is flooded, there is no leakage current that flows to the pedestrian's body.

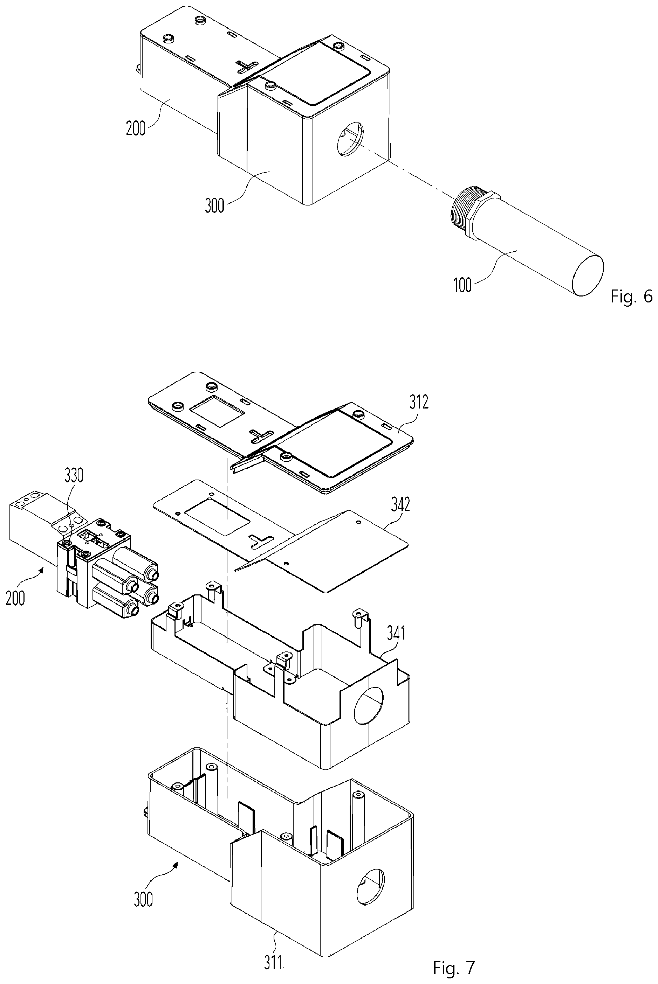

The electric shock prevention device according to the present disclosure, which includes the leakage current induction conduit 100 and the automatic leakage current recovery module 200 described above and also includes a leakage prevention unit 300, will be described below in detail with reference to FIG. 6 to FIG. 11.

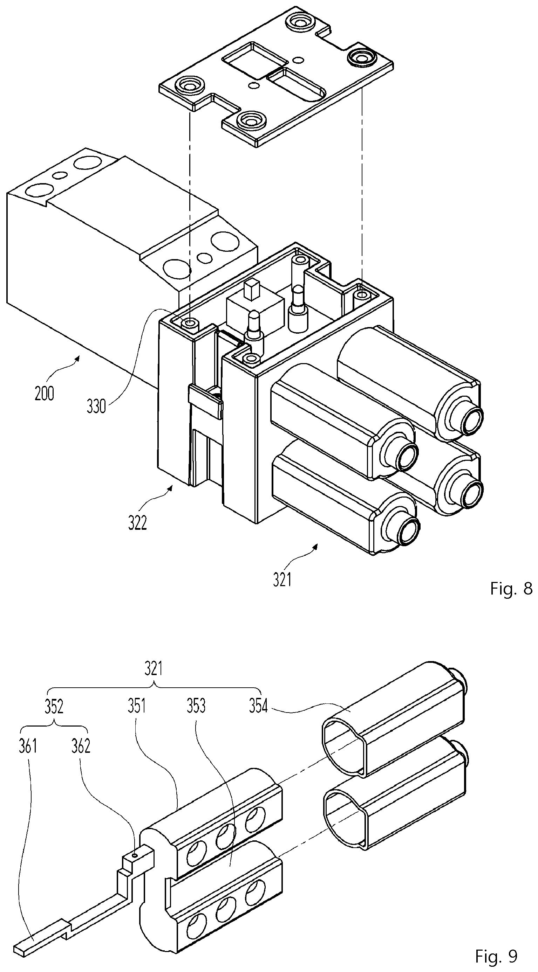

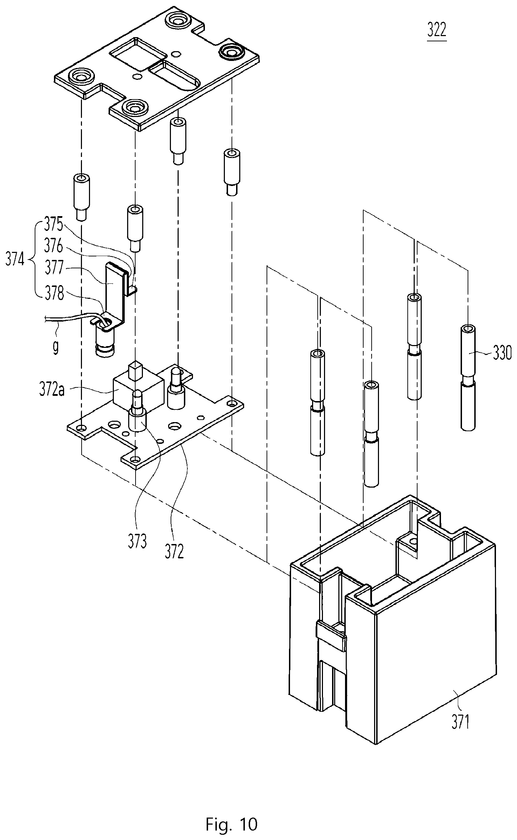

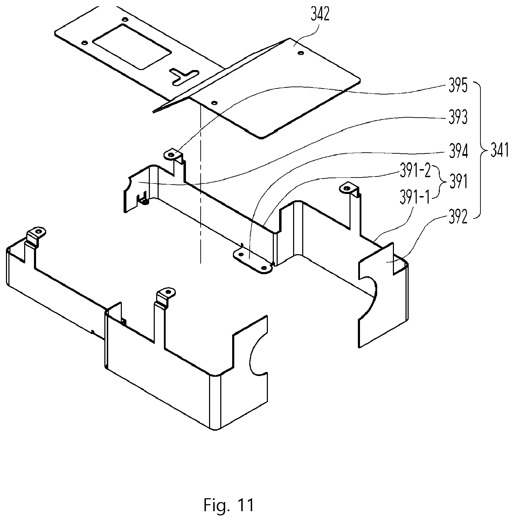

FIG. 6 is a drawing illustrating separately some components that constitute the electric shock prevention device according to the present disclosure, FIG. 7 is an exploded drawing illustrating a leakage prevention unit according to the present disclosure, and FIG. 8 is a drawing illustrating an application section included in the leakage prevention unit of the electric shock prevention device according to the present disclosure. FIG. 9 is a drawing illustrating an application connection part included in the leakage prevention unit of the electric shock prevention device according to the present disclosure, FIG. 10 is a drawing illustrating an application notification part included in the leakage prevention unit of the electric shock prevention device according to the present disclosure, and FIG. 11 is a drawing illustrating an electric shock prevention section included in the leakage prevention unit of the electric shock prevention device according to the present disclosure.

The electric shock prevention device according to the present disclosure includes: the leakage current induction conduit 100; the automatic leakage current recovery module 200 configured to cause leakage current transmitted from the leakage current induction conduit 100 to automatically flow to the neutral line of the cable (a power supply line); and the leakage prevention unit 300 configured to connect the neutral line of the cable and a power supply target and prevent leakage upon flooding.

Since the leakage current induction conduit 100 and the automatic leakage current recovery module 200 have been described above, detailed description thereof will be omitted, and the leakage prevention unit 300 will be described below.

The leakage prevention unit 300 includes a housing section 310, an application section 320 built in the housing section 310 and electrically connecting the cable and the power supply target (a lamp in the case of a streetlight), a recovery section 330 mounted in the application section 320 and connected to the neutral line of the cable through the application section 320 to recover leakage current, and an electric shock prevention section 340 built in the housing section 310, disposed to surround the application section 320, connected to the recovery section 330 and inducing current flowing out from the application section 320 upon flooding to the recovery section 330 to prevent an electric shock.

The housing section 310 may include, for example, a lower housing section 311 and an upper housing section 312 that covers an upper open area of the lower housing section 311. The lower housing section 311 may be fixedly installed on the inner wall of the power supply target.

The application section 320 is mounted in the housing section 310. The cable and the power supply target are connected by the medium of the application section 320 so that the power supply target may be operated (turned on in the case of a streetlight).

For example, the application section 320 may be configured to include an application connection part 321 and an application notification part 322.

The application connection part 321 may be configured to be coupled to the cable to be supplied with power and supply power to the power supply target.

The application connection part 321 may include a connection input portion 351, a connection coupling portion 352, and a connection output portion 353.

A pair of connection input portions 351 are disposed spaced apart from each other on the left and right, and a live line and a neutral line of the cable may be connected to the pair of connection input portions 351, respectively.

The connection coupling portion 352 has one end that is connected to the connection input portion 351, and may be electrically connected to at least any one of the application notification part 322 and the power supply target. For example, the connection coupling portion 352 may include a first coupling portion 361 that extends sideward from the connection input portion 351 and is connected to the application notification part 322, and a second coupling portion 362 that extends from the first coupling portion 361, passes through the application notification part 322 and is connected to the upper induction body section 142 of the leakage current induction conduit 100.

Each of a pair of connection output portions 353 may be connected to at least any one of the connection input portion 351 and the connection coupling portion 352. For example, the connection output portion 353 may be connected to the connection input portion 351 and may be disposed below the connection input portion 351. The connection output portion 353 may be connected to the output portion of the cable.

Each of the connection input portion 351 and the connection output portion 353 may be covered with a connection cover portion 354. The connection cover portion 354 includes an insulating material, protects a wire exposed to be connected to the connection input portion 351 and the connection output portion 353, and may induce leakage current toward the electric shock prevention section 340.

The application notification part 322 may notify whether the recovery section 330 and the cable are installed normally. For example, when a worker normally connects the recovery section 330 to the application notification part 322 and normally connects the cable to the application notification part 322, the application notification part 322 may notify a normally installed state by sound or light.

The application notification part 322 may include a case portion 371, a notification board portion 372 and a notification light portion 373.

The case portion 371 may be mounted in the housing section 310. The case portion 371 may include a lower case and an upper case that covers an upper open area of the lower case.

The notification board portion 372 is coupled to the case portion 371, and may be connected to the application connection part 321. For example, the notification board portion 372 is provided with a circuit to be turned on during normal operation, and may be connected to the second coupling portion 362. The recovery section 330 may be electrically connected to the notification board portion 372. The notification board portion 372 may connect the recovery section 330 and the neutral line of the cable as a circuit.

The notification light portion 373 may be turned on when the connection state of the recovery section 330 and the cable is normal. For example, the notification light portion 373 is mounted on the notification board portion 372, and may be provided with a notification switch portion 372a. Due to this fact, if the recovery section 330 and the cable are electrically connected to the notification board portion 372, even when positions where the live line and the neutral wire of the cable are connected to the connection input portion 351 are different, the notification light portion 373 may be turned on as long as the recovery section 330 and the neutral wire maintain a state in which they are connected to each other.

The application notification part 322 may further include a notification grounding portion 374. The notification grounding portion 374 may connect the notification board portion 372 and a grounding line portion g. For example, the notification grounding portion 374 may include a first grounding plate portion 375 that is coupled to the notification board portion 372, a second grounding plate portion 376 that extends upward from the first grounding plate portion 375 and penetrates the case portion 371, a third grounding plate portion 377 that is folded downward from the second grounding plate portion 376 and is in close contact with the outside of the case portion 371, and a fourth grounding plate portion 378 that extends sideward from the third grounding plate portion 377 and is connected to the grounding line portion g. The fourth grounding plate portion 378 may be supported by a support projection that projects outward from the case portion 371. The notification grounding portion 374 may ground the system in a situation where it is impossible to recover leakage current through the neutral wire.

The recovery section 330 is mounted in the application section 320, and is configured to be connected to the neutral line of the cable so as to recover leakage current.

The recovery section 330 is made of a conductor, and may be connected to the neutral line of the cable through the board circuit of the application section 320.

Four recovery sections 330 are electrically connected to the notification board portion 372 by being insert-molded into or penetrating the case portion 371 in a vertical direction, and the upper and lower ends of the recovery sections 330 may be connected to the electric shock prevention section 340.

The electric shock prevention section 340 is built in the housing section 310, is disposed to surround the application section 320, is made of a conductor, is connected to the recovery section 330, and may induce leakage current flowing out from the application section 320 upon flooding to the recovery section 330 to prevent an electric shock. For example, the housing section 310 may be made of an insulating material, and the electric shock prevention section 340 may be configured to collect leakage current that flows to be discharged through the gap of the housing section 310.

The electric shock prevention section 340 may include a side prevention part 341 and an upper prevention part 342.

The side prevention part 341 may be disposed to surround the side surface of the application section 320. For example, the side prevention part 341 may surround the side surfaces of the application connection part 321, the application notification part 322 and the automatic leakage current recovery module 200.

The side prevention part 341 may be formed to be separated into a pair, or one side prevention part 341 may form a closed curve. The side prevention part 341 may be supported by the inner wall of the housing section 310. As the occasion demands, the position of the side prevention part 341 may be adjusted to change the gap between the side prevention part 341 and the application section 320.

The upper prevention part 342 is connected to the side prevention part 341, and may be disposed to surround the upper surface of the application section 320. For example, the upper prevention part 342 may be disposed above the application connection part 321, the application notification part 322 and the automatic leakage current recovery module 200. The upper prevention part 342 may be supported by the side prevention part 341 or the housing section 310. As the occasion demands, the position of the upper prevention part 342 may be adjusted to change the gap between the upper prevention part 342 and the application section 320.

In more detail, the side prevention part 341 may include a side body portion 391, a side connection portion 392, a side cover portion 393, a side projection portion 394, and a side support portion 395.

The side body portion 391 may cover the side surface of the application section 320. For example, the side body portion 391 may include a first side body portion 391-1 that covers the cable and the side surface of the application connection part 321, and a second side body portion 391-2 that extends from the first side body portion 391-1 and covers the side surfaces of the application notification part 322 and the automatic leakage current recovery module 200.

The side connection portion 392 may be bent at the front end of the side body portion 391 and may be connected to the cable. For example, the side connection portion 392 may be in close contact with the cable or may be disposed between the housing section 310 and the cable. The side connection portion 392 may cover the front of the application section 320.

The side cover portion 393 may be bent at the rear end of the side body portion 391 and may surround the application section 320. For example, the side cover portion 393 may cover the rear of the application section 320. A hole may be formed in the side cover portion 393 to allow the cable to pass therethrough.

The side projection portion 394 may extend sideward from the side body portion 391 and be connected to the application section 320. For example, the side projection portion 394 that is formed at the lower end of the second side body portion 391-2 may be disposed below the application notification part 322. The side projection portion 394 and the application notification part 322 are coupled to the housing section 310, and the recovery section 330 provided in the application notification part 322 may be connected to the side projection portion 394.

The side support portion 395 may project upward from the side body portion 391 and support the upper prevention part 342. For example, the side support portion 395 may project from the upper ends of the first side body portion 391-1 and the second side body portion 391-2 and be coupled to the upper prevention part 342.

As is apparent from the above description, in the leakage current induction conduit and the electric shock prevention device including the same according to the present disclosure, advantages are provided in that it is possible to prevent electric shock accidents caused by leakage current and prevent human casualties by reliably preventing leakage current from flowing to the outside when leakage current occurs in electrical devices or electrical equipment due to flooding or the like and it is possible to shield leakage current so that leakage current is not released to the outside, even when the protection of a wire or the insulation of a wire in use is broken and thus leakage current occurs.

In addition, in the present disclosure, it is possible to improve management efficiency by automatically recovering leakage current when leakage current occurs, and it is possible to have universality since the leakage current induction conduit and the electric shock prevention device including the same may be applied to various electrical devices or electrical equipment such as street lights, electric motors, transformers and traffic signals.

The embodiments described in the present specification and the attached drawings merely illustrate a part of the technical spirit included in the present disclosure. Accordingly, since the embodiments disclosed in the present specification are intended not to limit but to describe the spirit of the present disclosure, it is apparent that the scope of the technical spirit of the present disclosure is not limited by the embodiments. It should be interpreted that all modifications and specific embodiments, which can be easily inferred by those skilled in the art within the scope of the technical spirit included in the present specification and drawings of the present disclosure, are included in the scope of the present disclosure.

## Claims

1. A leakage current induction conduit through which a cable passes, comprising:
a first leakage current induction pipe section formed as a tubular component made of an insulating material;
a first leakage current induction body section provided in the first leakage current induction pipe section, and configured to transmit, when leakage current occurs, leakage current to a second leakage current induction body section;
a second leakage current induction pipe section provided at one end of the first leakage current induction pipe section, and formed as a tubular component made of an insulating material; and
the second leakage current induction body section provided on the second leakage current induction pipe section, and configured to be connected to the first leakage current induction body section.

2. The leakage current guide conduit according to claim 1, wherein
the first leakage current induction pipe section is configured as a plurality of first leakage current induction pipe sections, and
a connector is provided between neighboring first leakage current induction pipe sections to couple the neighboring first leakage current induction pipe sections while electrically connecting first leakage current induction body sections.

3. The leakage current guide conduit according to claim 1, wherein the first leakage current induction body section is configured with a conductor that is formed on the inner wall of the first leakage current induction pipe section.

4. The leakage current guide conduit according to claim 3, wherein the first leakage current induction body section is configured with a conductor strip that is formed in a helical shape in the lengthwise direction of the first leakage current induction pipe section.

5. The leakage current guide conduit according to claim 4, wherein
the first leakage current induction body section is provided in a helical groove that is formed on the inner surface of the first leakage current induction pipe section, and
the upper surface of the first leakage current induction body section is provided lower than the height of the helical groove.

6. The leakage current guide conduit according to any one of claims 1 to 5, wherein the first leakage current induction body sections are formed at 90° intervals in a circumferential direction.

7. The leakage current guide conduit according to claim 1, wherein the second leakage current induction pipe section is configured such that the outside of the second leakage current induction pipe section is inserted and coupled into the first leakage current induction pipe section.

8. The leakage current guide conduit according to claim 1 or 7, wherein the second leakage current induction body section comprises:
a lower induction body section formed on the lower portion of the outer surface of the second leakage current induction pipe section to be connected to the first leakage current induction body section; and
an upper induction body section formed on the upper portion of the outer surface of the second leakage current induction pipe section, and connected to the lower induction body section.

9. The leakage current guide conduit according to claim 8, wherein
the first leakage current induction body section is formed in a helical shape on the inner surface of the first leakage current induction pipe section, and
the lower induction body section is formed in a helical shape on the outer surface of the second leakage current induction pipe section.

10. An electric shock prevention device for preventing an electric shock caused by leakage current of a cable for supplying power to a power supply target, comprising:
the leakage current induction conduit according to claim 1;
an automatic leakage current recovery module configured to automatically induce leakage current transmitted from the leakage current induction conduit to a neutral line of the cable; and
a leakage prevention unit configured to connect the neutral line of the cable and the power supply target and prevent leakage upon flooding.

11. The electric shock prevention device according to claim 10, wherein the automatic leakage current recovery module comprises:
an input section where a hot line and a neutral line extending from the outside are connected;
a constant voltage section connected to the hot line and the neutral line to rectify the hot line and the neutral line and output a predetermined voltage;
a first logic element configured to output a second logic state signal when an input from the hot line is a first logic state signal;
a second logic element configured to output a first logic state signal when an input from the hot line is a first logic state signal; and
an electronic switch section configured to connect an output to a terminal connected to the neutral line when the output of the first logic element is a second logic state signal and the output of the second logic element is a first logic state signal, and connect an output to a terminal connected to the hot line when the output of the first logic element is a first logic state signal and the output of the second logic element is a second logic state signal,
wherein the output of the electronic switch section is connected to the leakage current induction conduit.

12. The electric shock prevention device according to claim **11,** further comprising
a display section provided between the electronic switch section and the leakage current induction conduit, and configured to emit light depending on whether the display section is connected to the hot line.

13. The electric shock prevention device according to claim 10, wherein the leakage prevention unit comprises:
a housing section made of an insulator;
an application section built in the housing section, and configured to electrically connect the cable and the power supply target;
a recovery section mounted in the application section, and connected to the neutral line of the cable through the application section to recover leakage current; and
an electric shock prevention section, as a conductor, built in the housing section, disposed to surround the application section, connected to the recovery section, and configured to induce current flowing out from the application section upon flooding to the recovery section to prevent an electric shock.
